# EUROPEAN PATENT APPLICATION

(11) **EP 4 852 118 A1**
(43) Date of publication of application: **09.12.2026**
(21) Application number: 25926999.1
(22) Date of filing: 28.09.2025
(51) Int. Cl.: H01M 10/0525, H01M 4/62

(54) **BINDER, AND PREPARATION METHOD THEREFOR AND USE THEREOF**

(30) Priority: 31.03.2025 CN 202510396362
(71) Applicant: Chery Automobile Co., Ltd., Wuhu, Anhui 241006 (CN)
(72) Inventor: LI, Jing, Wuhu, Anhui 241006 (CN); XU, Fanglin, Wuhu, Anhui 241006 (CN)
(74) Representative: Adamson Jones
(86) International application number: PCT/CN2025/124854
(87) International publication number: WO 2026/208117

(57) **Abstract**

The present disclosure discloses a binder, and a preparation method and application thereof, belonging to the technical field of polymer materials. The binder includes a gradient copolymer of methyl methacrylate and an ester monomer, wherein a reactivity ratio r₁ of the methyl methacrylate ranges from 10 to 20, and a reactivity ratio r₂ of the ester monomer ranges from 0.02 to 0.05, wherein r₁ and r₂ satisfy r₁ × r₂ < 1. The binder not only provides good binder strength but also possesses moderate self-healing capability. When applied in the battery field (such as solid-state electrolyte membranes, negative electrode sheets), the binder can effectively alleviate the problem of battery performance degradation caused by volume changes during battery charging and discharging, significantly improving the service life and performance of the battery.

## Description

This application is based on and claims priority to Chinese Patent Application No. 202510396362.5, filed March 31, 2025, and entitled " BINDER, AND PREPARATION METHOD AND APPLICATION THEREOF", the entire contents of which are incorporated herein by reference.

### TECHNICAL FIELD

The present disclosure relates to the technical field of polymer materials, and particularly relates to a binder, and a preparation method and application thereof.

### BACKGROUND

In the field of batteries, a binder typically refers to a material that provides adhesion between the electrode material and the current collector, or between the solid electrolytes in batteries. The binder is an indispensable auxiliary material in batteries and plays a significant role in ensuring the stability of battery structure and electrochemical performance.

Common binders used in batteries currently include polyvinylidene fluoride, polyacrylonitrile, styrene-butadiene rubber, carboxymethyl cellulose, and the like. These binders not only exhibit poor interfacial compatibility but are also prone to cracking due to volume changes during battery charging and discharging, making it difficult to ensure the stability of the battery structure.

In view of this, there is an urgent need to provide a binder that not only exhibits high interfacial compatibility, ensuring the stability of physical and electrochemical properties across different interfaces in batteries, but also adapts to the volume changes during battery charging and discharging.

### SUMMARY

The present disclosure provides a binder, and a preparation method and application thereof, to solve technical problems existing in related technologies. Specifically, the following technical solutions are provided.

In the first aspect, the present disclosure provides a binder. The binder includes a gradient copolymer of methyl methacrylate and an ester monomer, wherein a reactivity ratio r₁ of the methyl methacrylate ranges from 10 to 20, and a reactivity ratio r₂ of the ester monomer ranges from 0.02 to 0.05, wherein r₁ and r₂ satisfy: ${r}_{1} \times {r}_{2} < 1 .$

In some possible embodiments, the ester monomer includes one or more of vinyl acetate, vinyl propionate, vinyl butyrate, vinyl valerate, or vinyl hexanoate.

In a second aspect, the present disclosure provides a preparation method for a binder. The preparation method includes: dissolving methyl methacrylate and an ester monomer in an organic solvent, and adding an initiator therein to obtain a reactant system for the binder; copolymerizing the methyl methacrylate and the ester monomer in the reactant system at a copolymerization temperature until copolymerization reaches a target conversion rate, cooling the reactant system to room temperature, and adding a polymerization inhibitor to the reactant system; and separating and purifying the reactant system after addition of the polymerization inhibitor to obtain the binder, wherein the binder is a gradient copolymer of the methyl methacrylate and the ester monomer, wherein a reactivity ratio r₁ of the methyl methacrylate ranges from 10 to 20, and a reactivity ratio r₂ of the ester monomer ranges from 0.02 to 0.05, wherein r₁ and r₂ satisfy: ${r}_{1} \times {r}_{2} < 1 .$

In some possible embodiments, a molar ratio of the methyl methacrylate to the ester monomer ranges from 1:1 to 10:1.

In some possible embodiments, a mass fraction of the initiator in the reactant system ranges from 0.1 wt% to 0.3 wt%.

In some possible embodiments, the copolymerization temperature ranges from 25°C to 180°C.

In the third aspect, the present disclosure provides a solid-state electrolyte membrane. The solid-state electrolyte membrane includes an electrolyte material and a binder, wherein the binder is the binder according to any one of the first aspect of the present disclosure.

In some possible embodiments, a mass fraction of the binder in the solid-state electrolyte membrane is less than or equal to 30 wt%.

In the fourth aspect, the present disclosure provides a solid-state battery. The solid-state battery includes the solid-state electrolyte membrane according to any one of the third aspect of the present disclosure.

In the fifth aspect, the present disclosure provides a negative electrode sheet. The negative electrode sheet includes a current collector and a negative electrode active material layer attached to at least one side surface of the current collector, wherein the negative electrode active material layer includes a negative electrode active material and a binder, wherein the binder is as described in any one of the first aspect of the present disclosure.

In some possible embodiments, a mass fraction of the binder in the negative electrode active material layer ranges from 2 wt% to 20 wt%.

In the sixth aspect, the present disclosure provides a lithium-ion battery. The lithium-ion battery includes the negative electrode sheet according to any one of the fifth aspect of the present disclosure.

The technical solutions in the present disclosure at least achieve the following beneficial effects.

The binder according to the present disclosure has an improved molecular structure, including a gradient copolymer of methyl methacrylate and an ester monomer. By selecting the methyl methacrylate and the ester monomer with significant differences in reactivity ratio, and controlling the reactivity ratio r₁ of the methyl methacrylate and the reactivity ratio r₂ of the ester monomer to satisfy: r₁ × r₂ < 1, the binder exhibits gradient changes in polarity and modulus along the molecular chain direction, which is conducive to enhancing the bonding properties of the binder. In this case, a methyl methacrylate-rich terminal segment and an ester monomer-rich terminal segment may be respectively formed at two ends of the molecular chain of the binder. The methyl methacrylate-rich terminal segment can provide crosslinking points, and the ester monomer-rich terminal segment can possess moderate mobility to provide moderate self-healing capability when the battery undergoes volume changes, ensuring the stability of the battery structure. When the binder is applied to batteries, the binder can effectively alleviate the problem of battery performance degradation caused by volume changes during battery charging and discharging, significantly improving the service life and performance of the battery.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 is a schematic diagram of an alternating current (AC) impedance test result of a solid-state electrolyte membrane prepared in Example 1 of the present disclosure;
FIG. 2 is a schematic diagram of an AC impedance test result of a solid-state electrolyte membrane prepared in Example 2 of the present disclosure.

### DETAILED DESCRIPTION

Addressing the technical problem of poor battery stability due to poor interfacial compatibility of the binder commonly found in current batteries, which makes it difficult to accommodate the volume changes during battery charging and discharging, the embodiments of the present disclosure provide a binder with an improved molecular structure. The binder not only provides better bonding strength between interfaces but also exhibits moderate self-healing capability when the battery undergoes volume changes, ensuring the stability of the battery structure.

The first aspect of the present disclosure discloses a binder. The binder includes a gradient copolymer of the methyl methacrylate and the ester monomer. In the binder, the reactivity ratio r₁ of the methyl methacrylate ranges from 10 to 20, and the reactivity ratio r₂ of the ester monomer ranges from 0.02 to 0.05. r₁ and r₂ satisfy : r₁ × r₂ < 1.

The binder according to the present disclosure has an improved molecular structure, including a gradient copolymer of the methyl methacrylate and the ester monomer. By selecting the methyl methacrylate and the ester monomer with significant differences in reactivity ratio, and controlling the reactivity ratio r₁ of the methyl methacrylate and the reactivity ratio r₂ of the ester monomer to satisfy: r₁ × r₂ < 1, the binder exhibits gradient changes in polarity and modulus along the molecular chain direction, which is conducive to enhancing the bonding properties of the binder. In this case, a methyl methacrylate-rich terminal segment and an ester monomer-rich terminal segment may be respectively formed at two ends of the molecular chain of the binder. The methyl methacrylate-rich terminal segment can provide crosslinking points, and the ester monomer-rich terminal segment can possess moderate mobility to provide moderate self-healing capability when the battery undergoes volume changes, ensuring the stability of the battery structure. When the binder is applied to batteries, the binder effectively alleviates the problem of battery performance degradation caused by volume changes during battery charging and discharging, significantly improving the service life and performance of the battery.

The following provides further illustrative explanations on the properties of different components in the binder.

The reactivity ratio of the monomer is used, but is not limited to, indicating the activity properties of the monomer in copolymerization. In view of this, in the embodiments of the present disclosure, the molecular structure of the binder is designed by controlling the reactivity ratio of the monomer. For example, in the gradient copolymer of the methyl methacrylate and the ester monomer, the reactivity ratio r₁ of the methyl methacrylate ranges from 10 to 20, indicating a tendency to preferentially copolymerize with itself during the copolymerization; and the reactivity ratio of the ester monomer ranges from 0.01 to 0.05, indicating a tendency to preferentially copolymerize with the methyl methacrylate. The copolymer formed by the methyl methacrylate and the ester monomer can exhibit a gradient change in polarity and modulus along the molecular chain direction, forming a methyl methacrylate-rich terminal segment that provides crosslinking points and an ester monomer-rich terminal segment that provides self-healing capability.

In some embodiments, the reactivity ratio r₁ of the methyl methacrylate ranges from 10 to 20, for example, 10, 11, 12, 13, 14, 15, 16, 17, 18, 19, 20, or the like; and the reactivity ratio r₂ of the ester monomer ranges from 0.02 to 0.05, for example, 0.02, 0.025, 0.03, 0.035, 0.04, 0.045, 0.05, or the like, or other values within the ranges.

In some embodiments, the ester monomer includes one or more of vinyl acetate, vinyl propionate, vinyl butyrate, vinyl valerate, or vinyl hexanoate.

Illustratively, the molar ratio of the methyl methacrylate to the ester monomer ranges from 1:1 to 10:1, for example, 1:1, 2:1, 3:1, 4:1, 5:1, 6:1, 8:1, 9:1, and 10:1, or other values within the range, thereby ensuring sufficient gradient polymerization between the methyl methacrylate and the ester monomer and obtaining the binder with appropriate viscosity.

In some embodiments, the binder mentioned above is prepared through the following preparation method.

Step 1: The methyl methacrylate and the ester monomer are dissolved in an organic solvent, and an initiator is added to obtain a reactant system for the binder.

In some embodiments, the molar ratio of the methyl methacrylate to the ester monomer in the reactant system ranges from 1:1 to 10:1, for example, 1:1, 2:1, 3:1, 4:1, 5:1, 6:1, 8:1, 9:1, 10:1, or the like, or other values within the range.

The organic solvent is used for, but is not limited to, providing a reaction medium for the reaction between various components (such as the methyl methacrylate and the ester monomer) in the reactant system, and homogenizing the reactant system. In some embodiments, the organic solvent includes, for example, one or more of toluene, chlorobenzene, xylene, p-xylene, tetrahydrofuran, n-hexane, cyclohexane, dimethylformamide, dimethyl sulfoxide, or acetone.

The initiator is used for, but is not limited to, initiating the copolymerization between the methyl methacrylate and the ester monomer, and regulating the sequence distribution of the gradient copolymer of the methyl methacrylate and the ester monomer.

In some embodiments, the initiator includes one or more of a free radical initiator, a redox initiator, an azo initiator, or a bifunctional initiator.

In some embodiments, the mass fraction of the initiator in the reactant system ranges from 0.1 wt% to 0.3 wt%, for example, 0.1 wt%, 0.15 wt%, 0.2 wt%, 0.25 wt%, 0.3 wt%, or the like, or other values within the range.

In some embodiments, in order to adjust the molecular weight and molecular weight distribution of the binder, and further enhance the bonding effect and self-healing capability of the binder, the preparation method for the binder according to embodiments of the present disclosure further includes: adding a chain transfer agent to the reactant system. In some embodiments, the chain transfer agent includes one or more of thiols, dithioesters, trithiocarbonates, or benzyl halides.

In some embodiments, the preparation method for the binder according to embodiments of the present disclosure further includes: dissolving the methyl methacrylate and the ester monomer in the organic solvent, and bubbling with nitrogen in the organic solvent to improve reaction efficiency and avoid interference from oxygen on the reaction.

In some embodiments, the duration for bubbling with nitrogen in the organic solvent ranges from 25 minutes to 35 minutes, for example, 25 minutes, 26 minutes, 27 minutes, 28 minutes, 29 minutes, 30 minutes, 31 minutes, 32 minutes, 33 minutes, 34 minutes, 35 minutes, or the like, or other values within the range.

Step 2: The methyl methacrylate and the ester monomer in the reactant system are copolymerized at the copolymerization temperature until the copolymerization reaches a target conversion rate, the system is cooled to room temperature, and a polymerization inhibitor is added to the reactant system.

In some embodiments, the copolymerization temperature for the copolymerization of the methyl methacrylate and the ester monomer in the reactant system ranges from 25°C to 180°C, for example, 25°C, 30°C, 35°C, 40°C, 45°C, 50°C, 55°C, 60°C, 65°C, 7°C, 75°C, 80°C, 85°C, 90°C, 95°C, 100°C, 110°C, 120°C, 130°C, 140°C, 150°C, 160°C, 170°C, 180°C, or the like, or other values within the range.

In some embodiments, when the methyl methacrylate and the ester monomer in the reactant system are copolymerized at the copolymerization temperature, the reaction duration ranges from 5.5 hours to 7.5 hours, for example, 5.5 hours, 5.6 hours, 5.7 hours, 5.8 hours, 5.9 hours, 6.0 hours, 6.1 hours, 6.2 hours, 6.3 hours, 6.4 hours, 6.5 hours, 7 hours, 7.5 hours , or the like, or other values within the range.

In some embodiments, the heating method for the methyl methacrylate and the ester monomer in the reactant system during copolymerization may be, for example, oil bath heating.

In some embodiments, the preparation method for the binder according to the embodiments of the present disclosure further includes: continuously bubbling with nitrogen in the reactant system during the copolymerization of the methyl methacrylate and the ester monomer at the copolymerization temperature, in order to improve reaction efficiency and avoid interference from oxygen.

In some embodiments, the preparation method for the binder according to embodiments of the present disclosure further includes: continuously stirring the methyl methacrylate and the ester monomer in the reactant system during the copolymerization at the copolymerization temperature to improve the reaction efficiency.

In some embodiments, the value of the target conversion rate may be adjusted according to the actual application situation, and the present disclosure does not impose any restrictions in this regard.

The polymerization inhibitor is used for, but not limited to, terminating copolymerization.

In some embodiments, the polymerization inhibitor includes one or more of hydroquinone, 2,6-di-tert-butyl-p-cresol, p-hydroxyanisole, p-benzoquinone, methylhydroquinone, nitrobenzene, or dinitrobenzene.

Step 3: The reactant system after addition of the polymerization inhibitor is separated and purified to obtain the binder, where the binder is a gradient copolymer of the methyl methacrylate and the ester monomer, the reactivity ratio r₁ of the methyl methacrylate ranges from 10 to 20, the reactivity ratio r₂ of the ester monomer ranges from 0.02 to 0.05, and r₁ and r₂ satisfy: r₁ × r₂ < 1.

In some embodiments, the method for separating and purifying the reactant system after addition of the polymerization inhibitor includes, for example, adding an extraction solvent to the reactant system after addition of the polymerization inhibitor, so that the binder precipitates in the extraction solvent; and separating and drying the precipitate in the extraction solvent to obtain the binder.

In some embodiments, the extraction solvent includes one or more of methanol, ethanol, isopropanol, n-hexane, cyclohexane, petroleum ether, acetone, or ether.

It should be understood that the preparation method for the binder according to the above embodiment falls under the same concept as the embodiments of the binder, and for the specific implementation thereof, e.g., the types of the ester monomer, reference may be made to to in the embodiments of the binder, which is not elaborated herein.

The present disclosure further provides a solid-state electrolyte membrane. The solid-state electrolyte membrane includes an electrolyte material and a binder. The binder used therein is the binder described above.

In the solid-state electrolyte membrane, the electrolyte material is used for, but is not limited to, providing a transport channel for lithium ions (or other ions). The binder is used for, but is not limited to, enhancing the adhesion between electrolyte materials, so that the electrolyte materials adhere together to form a uniform membrane structure. The solid-state electrolyte membrane according to the embodiments of the present disclosure utilizes a binder with a specific molecular structure. The methyl methacrylate-rich terminal segment and the ester monomer-rich terminal segment are respectively formed at two ends of the molecular chain of the binder. The methyl methacrylate-rich terminal segment can provide crosslinking points, and the ester monomer-rich terminal segment can possess moderate mobility to provide moderate self-healing capability, avoiding issues such as voids and detachment of electrolyte materials when the solid-state electrolyte membrane undergoes volume changes, and ensuring the stability of the solid-state electrolyte membrane.

In some embodiments, the mass fraction of the binder in the solid-state electrolyte membrane is less than or equal to 30 wt%, for example, 30 wt%, 25 wt%, 20 wt%, 15 wt%, 10 wt%, 5 wt%, or the like, or other values within the range.

In some embodiments, the electrolyte material include one or more of the following types.
(1) Argyrodite-type Li6PS5X, where X is, for example, one or more selected from Cl, Br, or I.
(2) Lithium germanium phosphide sulfide (Li10GeP2S12).
(3) Thio-LISICON type Li_{3+y}GezP_{1-y}S₄, where 0 < y < 1, for example, 0.1, 0.2, 0.3, 0.4, 0.5, 0.6, 0.7, 0.8, 0.9, or the like, or other values within the range.
(4) Li2S-P2S5 based glass ceramic.
(5) Amorphous sulfides, including one or more of Li₂S-P₂S₅-based sulfides, Li₃PS₄, Li₂S-SiS₂-based sulfides, or Li₂S-GeS₂-based sulfides.
(6) Li3PS4-Z, where Z is, for example, selected from Cl and/or Br.

In some embodiments, the thickness of the solid-state electrolyte membrane ranges from 5 µm to 200 µm, for example, 5 µm, 25 µm, 50 µm, 75 µm, 100 µm, 125 µm, 150 µm, 175 µm, 200 µm, or the like, or other values within the range.

In some embodiments, the ionic conductivity of the solid-state electrolyte membrane ranges from 10⁻⁴ S/cm to 10⁻² S/cm, for example, 0.001 S/cm, 0.005 S/cm, 0.01 S/cm, 0.02 S/cm, 0.03 S/cm, 0.04 S/cm, 0.05 S/cm, 0.06 S/cm, 0.07 S/cm, 0.08 S/cm, 0.09 S/cm, 0.1 S/cm, or the like, or other values within the range.

In some embodiments, the solid-state electrolyte membrane mentioned above may be prepared through the following preparation methods.

Step 1: The electrolyte material and the binder are dispersed in a solvent and mixed uniformly to obtain the slurry for the solid-state electrolyte membrane.

The binder is the gradient copolymer of the methyl methacrylate and the ester monomer, the reactivity ratio r₁ of the methyl methacrylate ranges from 10 to 20, the reactivity ratio r₂ of the ester monomer ranges from 0.02 to 0.05, and r₁ and r₂ satisfy: r₁ × r₂ < 1.

In some embodiments, the mass fraction of the binder is less than or equal to 30 wt%, for example, 30 wt%, 25 wt%, 20 wt%, 15 wt%, 10 wt%, 5 wt%, or the like, or other values within the range.

In some embodiments, the solvent is, for example, toluene.

In some embodiments, the mixing time for uniformly mixing the electrolyte material and the binder ranges from, for example, 1.5 hours to 3.5 hours, for example, 1.5 hours, 1.8 hours, 1.9 hours, 2.0 hours, 2.1 hours, 2.2 hours, 2.5 hours, 2.8 hours, 3 hours, 3.5 hours, or the like, or other values within the range.

Step 2: The slurry is uniformly coated on the substrate and is dried, followed by hot isostatic pressing to obtain the solid-state electrolyte membrane.

In some embodiments, after uniformly coating the slurry on the substrate, the drying temperature during drying ranges from, for example, 70°C to 90°C, for example, 70°C, 75°C, 80°C, 85°C, 90°C, or the like; and the drying time ranges from 11 hours to 24 hours, for example, 11 hours, 11.5 hours, 12 hours, 12.5 hours, 13 hours, 14 hours, 15 hours, 16 hours, 17 hours, 18 hours, 19 hours, 20 hours, 21 hours, 22 hours, 23 h, 24 hours, or the like, or other values within the range.

In some embodiments, the substrate may be, for example, aluminum foil.

In some embodiments, the temperature during hot isostatic pressing ranges from 45°C to 70°C, for example, 45°C, 46°C, 47°C, 48°C, 49°C, 50°C, 51°C, 52°C, 53°C, 54°C, 55°C, 60°C, 65°C, 70°C, or the like. The pressure during hot isostatic pressing ranges from 180 MPa to 250 MPa, for example, 180 MPa, 185 MPa, 190 MPa, 195 MPa, 200 MPa, 205 MPa, 210 MPa, 215 MPa, 220 MPa, 230 MPa, 240 MPa, 250 MPa, or the like, or other values within the range.

The present disclosure further provides a solid-state battery utilizing the solid-state electrolyte membrane. In the solid-state battery according to the embodiments of the present disclosure, the solid-state electrolyte membrane employs the binder with a specific molecular structure, significantly enhancing the stability of the solid-state electrolyte membrane, thereby improving the stability of the solid-state battery and extending the service life thereof.

The present disclosure further provides a negative electrode sheet. The negative electrode sheet includes a current collector and a negative electrode active material layer attached to at least one side surface of the current collector. The negative electrode active material layer includes a negative electrode active material and a binder. The binder is the aforementioned binder.

The negative electrode active material in the negative electrode active material layer of the negative electrode sheet is used for, but is not limited to, storing and releasing lithium ions (or other ions). The binder is used for, but is not limited to, providing bonding strength between the negative electrode active materials and between the negative electrode active material and the current collector, thereby maintaining the structural integrity of the negative electrode sheet. The negative electrode sheet according to the embodiments of the present disclosure utilizes the binder with a specific molecular structure. The methyl methacrylate-rich terminal segment and the ester monomer-rich terminal segment are respectively formed at two ends of the molecular chain of the binder. The methyl methacrylate-rich terminal segment can provide crosslinking points, and the ester monomer-rich terminal segment can possess moderate mobility to provide moderate self-healing capability. This avoids, when the negative electrode sheet undergoes volume changes, issues such as voids and detachment of the negative electrode active material, and ensures the stability of the negative electrode sheet.

In some embodiments, the mass fraction of the binder in the negative electrode active material layer ranges from 2 wt% to 20 wt%, such as 2 wt%, 4 wt%, 6 wt%, 8 wt%, 10 wt%, 12 wt%, 14 wt%, 16 wt%, 18 wt%, 20 wt%, or the like, or other values within the range.

In some embodiments, the negative electrode active material is, for example, a silicon-based negative electrode active material. For example, the negative electrode active material includes one or more of a silicon-carbon composite negative electrode active material, a pre-lithiated silicon-based negative electrode active material, or a nanostructured silicon negative electrode active material.

The present disclosure further provides a lithium-ion battery. The lithium-ion battery includes the negative electrode sheet as described above. In the embodiments of the present disclosure, the negative electrode sheet of the lithium-ion battery utilizes the binder with a specific molecular structure, significantly enhancing the stability of the negative electrode sheet. This is conducive to improving the stability of the lithium-ion battery and extending the service life thereof.

The exemplary embodiments of the present disclosure are described in more detail below. Although the following describes exemplary embodiments of the present disclosure, it should be understood that the present disclosure may be implemented in various forms and should not be limited by the embodiments described herein. Where specific technologies or conditions are not specified in the examples, the technologies or conditions described in the literature within the field or in the product specifications shall apply. Where reagents or instruments are not specified with a manufacturer, they are all conventional products available commercially.

### Example 1

Example 1 provides a solid-state electrolyte membrane. The binder involved in the solid-state electrolyte membrane is prepared by: dissolving methyl methacrylate and vinyl acetate in a toluene solvent at a molar ratio of 3:1, bubbling with nitrogen for 30 minutes to remove oxygen, adding 0.1 wt% azobisisobutyronitrile, and continuously bubbling with nitrogen while stirring until the methyl methacrylate and the vinyl acetate are completely dissolved, thereby obtaining a reactant system for the binder; heating the reactant system to 70°C in an oil bath, stirring at a constant speed, adding hydroquinone after the reaction for 6 hours, to obtain a reaction solution for the binder; and dropping the reaction solution in excess methanol to precipitate a precipitate, which is filtered and washed to obtain the binder.

The binder is a gradient copolymer of the methyl methacrylate and the vinyl acetate. During the reaction process, the reactivity ratio r₁ of the methyl methacrylate ranges from 10 to 20, and the reactivity ratio r₂ of the vinyl acetate ranges from 0.02 to 0.05. Furthermore, r₁ and r₂ satisfy: r₁ × r₂ < 1.

Step 1: In a glove box, 95 parts by weight of Li₆PS₅Cl and 5 parts by weight of the binder were dispersed in toluene, mechanically stirred in a sealed container, and mixed uniformly for 2 hours to obtain a slurry.

Step 2: The slurry was uniformly coated on aluminum foil, transferred to a vacuum oven, and dried under vacuum at 80°C for 12 hours, followed by hot isostatic pressing at 50°C and 200 MPa to obtain the solid-state electrolyte membrane.

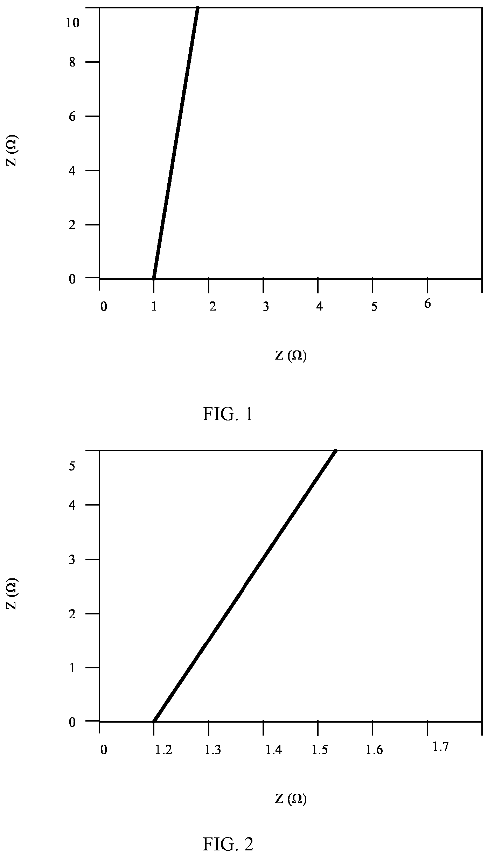

FIG. 1 is a schematic diagram of an AC impedance test result of a solid-state electrolyte membrane prepared in Example 1 in the present disclosure.

The solid-state electrolyte membrane (with a thickness of 19 µm) prepared in Example 1 was assembled into a solid-state battery, using NCM811 as the positive electrode active material and silicon carbon as the negative electrode active material.

In the solid-state battery assembled using the solid-state electrolyte membrane prepared in Example 1, the impedance value of the solid-state electrolyte membrane at room temperature is 1 ohm, and the ionic conductivity is 2.44 mS/cm (FIG. 1).

The solid-state battery assembled using the solid-state electrolyte membrane prepared in Example 1 can stably cycle for 2000 cycles at 0.1C, with a capacity retention rate of 80%.

### Example 2

Example 2 provides a solid-state electrolyte membrane. The binder involved in the solid-state electrolyte membrane is prepared by: dissolving methyl methacrylate and vinyl propionate in a xylene solvent at a molar ratio of 4:1, bubbling with nitrogen for 30 minutes to remove oxygen, adding 0.3 wt% azobisisobutyronitrile, and continuously bubbling with nitrogen while stirring until the methyl methacrylate and vinyl propionate are completely dissolved, thereby obtaining a reactant system for the binder; heating the reactant system to 60°C in an oil bath, stirring at a constant speed, adding hydroquinone after the reaction for 5 hours to obtain a reaction solution for the binder; and dropping the reaction solution in excess ethanol to precipitate a precipitate, which is filtered and washed to obtain the binder.

The binder is a gradient copolymer of the methyl methacrylate and the vinyl propionate. During the reaction process, the reactivity ratio r₁ of the methyl methacrylate ranges from 10 to 20, the reactivity ratio r₂ of the vinyl propionate ranges from 0.02 to 0.05, and r₁ and r₂ satisfy: r₁ × r₂ < 1.

Step 1: In a glove box, 96 parts by weight of Li₆PS₅Cl and 4 parts by weight of the binder were dispersed in xylene, mechanically stirred in a sealed container, and mixed uniformly for 2 hours to obtain a slurry.

Step 2: The slurry was uniformly coated on aluminum foil, transferred to a vacuum oven, and dried under vacuum at 90°C for 12 hours, followed by hot isostatic pressing at 60°C and 200 MPa to obtain the solid-state electrolyte membrane.

FIG. 2 is a schematic diagram of an AC impedance test result of a solid-state electrolyte membrane prepared in Example 2 in the present disclosure.

The solid-state electrolyte membrane (with a thickness of 18 µm) prepared in Example 2 was assembled into a solid-state battery, using LiCoO₂ as the positive electrode active material and lithium metal as the negative electrode active material.

In the solid-state battery assembled using the solid-state electrolyte membrane prepared in Example 2, the impedance value of the solid-state electrolyte membrane at room temperature is 1.2 ohms, and the ionic conductivity is 1.92 mS/cm (FIG. 2).

The solid-state battery assembled using the solid-state electrolyte membrane prepared in Example 2 can stably cycle for 2000 cycles at 0.5C, with a capacity retention rate of 82%.

### Example 3

Example 3 provides a solid-state electrolyte membrane. The binder involved in the solid-state electrolyte membrane is prepared by: dissolving methyl methacrylate and vinyl butyrate in a xylene solvent at a molar ratio of 3:1, bubbling with nitrogen for 30 minutes to remove oxygen, adding 0.1 wt% azobisisobutyronitrile, and continuously bubbling with nitrogen while stirring until the methyl methacrylate and vinyl butyrate are completely dissolved, obtaining a reactant system for the binder; heating the reactant system to 60°C in an oil bath, stirring at a constant speed, adding hydroquinone after the reaction for 5 hours to obtain a reaction solution for the binder; and dropping the reaction solution in excess methanol to precipitate a precipitate, which is filtered and washed to obtain the binder.

The binder is a gradient copolymer of the methyl methacrylate and the vinyl butyrate. During the reaction process, the reactivity ratio r₁ of the methyl methacrylate ranges from 10 to 20, the reactivity ratio r₂ of the vinyl butyrate ranges from 0.02 to 0.05, and r₁ and r₂ satisfy: r₁ × r₂ < 1.

Step 1: In a glove box, 94 parts by weight of Li₁₀GeP₂S₁₂ and 6 parts by weight of the binder were dispersed in xylene, mechanically stirred in a sealed container, and mixed uniformly for 2 hours obtain a slurry.

Step 2: The slurry was uniformly coated on aluminum foil, transferred to a vacuum oven, and dried under vacuum at 90°C for 12 hours, followed by hot isostatic pressing at 50°C and 200 MPa to obtain the solid-state electrolyte membrane.

The solid-state electrolyte membrane (with a thickness of 25 µm) prepared in Example 3 was assembled into a solid-state battery, using LiCoO₂ as the positive electrode active material and silicon carbon as the negative electrode active material.

The solid-state battery assembled using the solid-state electrolyte membrane prepared in Example 3 can stably cycle for 1000 cycles at 1C, with a capacity retention rate of 81%.

### Example 4

Example 4 provides a solid-state electrolyte membrane. The binder involved in the solid-state electrolyte membrane is prepared by: dissolving methyl methacrylate and vinyl valerate in a toluene solvent at a molar ratio of 3:1, bubbling with nitrogen for 30 minutes to remove oxygen, adding 0.2 wt% azobisisobutyronitrile, and continuously bubbling with nitrogen while stirring until the methyl methacrylate and vinyl valerate are completely dissolved, obtaining a reactant system for the binder; heating the reactant system to 60°C in an oil bath, stirring at a constant speed, adding hydroquinone after the reaction for 7 hours to obtain a reaction solution for the binder; and dropping the reaction solution in excess methanol to precipitate a precipitate, which is filtered and washed to obtain the binder.

The binder is a gradient copolymer of the methyl methacrylate and the vinyl valerate. During the reaction process, the reactivity ratio r₁ of the methyl methacrylate ranges from 10 to 20, the reactivity ratio r₂ of the vinyl valerate ranges from 0.02 to 0.05, and r₁ and r₂ satisfy: r₁ × r₂ < 1.

Step 1: In a glove box, 97 parts by weight of Li_{3.5}Ge_{0.5}P_{0.5}S₄ and 3 parts by weight of the binder were dispersed in toluene, mechanically stirred in a sealed container, and mixed uniformly for 3 hours to obtain a slurry.

Step 2: The slurry was uniformly coated on aluminum foil, transferred to a vacuum oven, dried under vacuum at 90°C for 24 hours, followed by hot isostatic pressing at 60°C and 250 MPa to obtain the solid-state electrolyte membrane.

The solid-state electrolyte membrane (with a thickness of 28 µm) prepared in Example 4 was assembled into a solid-state battery, using NCM811 as the positive electrode active material and silicon carbon as the negative electrode active material.

The solid-state battery assembled using the solid-state electrolyte membrane prepared in Example 4 can stably cycle for 1000 cycles at 1C, with a capacity retention rate of 83%.

### Example 5

Example 5 provides a negative electrode sheet. The binder involved in the negative electrode sheet is prepared by: dissolving methyl methacrylate and vinyl acetate in a toluene solvent at a molar ratio of 3:1, bubbling with nitrogen for 30 minutes to remove oxygen, adding 0.1 wt% azobisisobutyronitrile, and continuously bubbling with nitrogen while stirring until the methyl methacrylate and the vinyl acetate are completely dissolved, thereby obtaining a reactant system for the binder; heating the reactant system to 70°C in an oil bath, stirring at a constant speed, adding hydroquinone after the reaction for 6 hours to obtain a reaction solution for the binder; and dropping the reaction solution in excess methanol to precipitate a precipitate, which is filtered and washed to obtain the binder.

The binder is a gradient copolymer of the methyl methacrylate and the vinyl acetate. During the reaction process, the reactivity ratio r₁ of the methyl methacrylate ranges from 10 to 20, the reactivity ratio r₂ of the vinyl acetate ranges from 0.02 to 0.05, and r₁ and r₂ satisfy: r₁ × r₂ < 1.

Step 1: Silicon carbon, SuperP, and the binder were mixed in a mass ratio of 8:1:1 and dissolved in N-methylpyrrolidone, followed by stirring and defoaming to obtain a uniformly dispersed electrode slurry.

Step 2: The electrode slurry was coated on the copper foil, and dried under vacuum at 120°C for 12 hours to obtain the negative electrode sheet.

The negative electrode sheet prepared in Example 5 was assembled into a solid-state battery, using NCM811 as the positive active material and the solid-state electrolyte membrane prepared in Example 1 as the electrolyte.

The solid-state battery assembled using the negative electrode sheet prepared in Example 5 can stably cycle for 3000 cycles at 0.1C, with a capacity retention rate of 80%.

In summary, the binder according to the embodiments of the present disclosure has a specific molecular structure. When applied in the battery field, such as in solid-state electrolyte membranes or negative electrode sheets, the binder can significantly enhance the stability of the solid-state electrolyte membrane or negative electrode sheet, thereby ensuring the stability of the battery. This is conducive to improving the performance of the battery and extending the service life.

The above description is only intended to facilitate the understanding of the technical solutions of the present disclosure by those skilled in the art, and is not intended to limit the present disclosure. Any modifications, equivalent substitutions, improvements, and the like made within the spirit and principles of the present disclosure shall fall within the scope of protection of the present disclosure.

## Claims

1. A binder, comprising: a gradient copolymer of methyl methacrylate and an ester monomer, wherein a reactivity ratio r₁ of the methyl methacrylate ranges from 10 to 20, and a reactivity ratio r₂ of the ester monomer ranges from 0.02 to 0.05, wherein r₁ and r₂ satisfy: ${r}_{1} \times {r}_{2} < 1 .$

2. The binder according to claim 1, wherein the ester monomer comprises one or more of vinyl acetate, vinyl propionate, vinyl butyrate, vinyl valerate, or vinyl hexanoate.

3. A preparation method for a binder, wherein the binder is as defined in claim 1 or claim 2, and the preparation method comprises:
dissolving methyl methacrylate and an ester monomer in an organic solvent, and adding an initiator therein to obtain a reactant system for the binder;
copolymerizing the methyl methacrylate and the ester monomer in the reactant system at a copolymerization temperature until copolymerization reaches a target conversion rate, cooling the reactant system to room temperature, and adding a polymerization inhibitor to the reactant system; and
separating and purifying the reactant system after addition of the polymerization inhibitor to obtain the binder, wherein the binder is a gradient copolymer of the methyl methacrylate and the ester monomer, wherein a reactivity ratio r₁ of the methyl methacrylate ranges from 10 to 20, and a reactivity ratio r₂ of the ester monomer ranges from 0.02 to 0.05, wherein r₁ and r₂ satisfy: ${r}_{1} \times {r}_{2} < 1 .$

4. The preparation method according to claim 3, wherein a molar ratio of the methyl methacrylate to the ester monomer ranges from 1:1 to 10:1.

5. The preparation method according to claim 3, wherein a mass fraction of the initiator in the reactant system ranges from 0.1 wt% to 0.3 wt%.

6. The preparation method according to claim 3, wherein the copolymerization temperature ranges from 25°C to 180°C.

7. A solid-state electrolyte membrane, comprising: an electrolyte material and a binder, wherein the binder is the binder as defined in claim 1 or claim 2.

8. The solid-state electrolyte membrane according to claim 7, wherein a mass fraction of the binder in the solid-state electrolyte membrane is less than or equal to 30 wt%.

9. A solid-state battery, comprising: the solid-state electrolyte membrane as defined in claim 7 or claim 8.

10. A negative electrode sheet, comprising: a current collector and a negative electrode active material layer attached to at least one side surface of the current collector, wherein the negative electrode active material layer comprises a negative electrode active material and a binder, the binder being the binder as defined in claim 1 or claim 2.

11. The negative electrode sheet according to claim 10, wherein a mass fraction of the binder in the negative electrode active material layer ranges from 2 wt% to 20 wt%.

12. A lithium-ion battery, comprising: the negative electrode sheet as defined in claim 10 or claim 11.
